# EUROPÄISCHE PATENTSCHRIFT

(11) **EP 1 240 479 B1**
(45) Veröffentlichungstag und Bekanntmachung des Hinweises auf die Patenterteilung: **23.03.2016**
(21) Anmeldenummer: 01996718.1
(22) Anmeldetag: 26.10.2001
(51) Int. Cl.: G01D 5/347

(54) **VERFAHREN ZUR SIGNALAUSWERTUNG EINER OPTOELEKTRONISCHEN WEG- ODER WINKELMESSEINRICHTUNG SOWIE VERWENDUNG EINES SOLCHEN VERFAHRENS**
METHOD FOR EVALUATING THE SIGNALS OF AN OPTOELECTRONIC DISPLACEMENT OR ANGLE MEASURING DEVICE AND IMPLEMENTATION OF SAID METHOD
PROCEDE D'INTERPRETATION DE SIGNAUX D'UN DISPOSITIF OPTOELECTRONIQUE DE MESURE DE TRAJECTOIRE ET D'ANGLE, ET MISE EN OEUVRE D'UN PROCEDE DE CE TYPE

(30) Priorität: 15.11.2000 DE 10056605
(43) Veröffentlichungstag der Anmeldung: 18.09.2002
(73) Patentinhaber: Leopold Kostal GmbH & Co. KG, 58507 Lüdenscheid (DE)
(72) Erfinder: BLÄSING, Frank, 59457 Werl (DE); SCHIRP, Christian, 44866 Bochum (DE)
(86) Internationale Anmeldenummer: PCT/EP2001/012393
(87) Internationale Veröffentlichungsnummer: WO 2002/040946

(56) Entgegenhaltungen:
- WO-A-99/32345
- DE-A- 19 638 912
- DE-A- 19 705 312

## Beschreibung

Die Erfindung betrifft ein Verfahren zur Signalauswertung einer optoelektronischen Weg- oder Winkelmesseinrichtung mit einer gegenüber einer aus einer Lichtquelle und einem eine Vielzahl von optoelektronischen Wandlerelementen aufweisenden Sensorarray umfassenden Sende-Empfangseinheit relativ bewegbaren, zumindest eine Codespur aufweisenden Codescheibe, welches Verfahren Verfahrensschritte zum Anpassen von Auswertung und/oder zumindest eines Messparameters der sich bei einer Belichtung eines Wandlerelementes des Sensorarrays ergebenden Signalamplitude an sich ändernde Messparameter beinhaltet.

Weg- und Winkelmesseinrichtungen werden vielfach zur automatischen Positionierung und Messung in Werkzeugmaschinen und Koordinatenmessgeräten eingesetzt. Drehwinkelsensoren dienen beispielsweise im Kraftfahrzeugbereich zum Bestimmen der absoluten Winkelstellung des Lenkrades und werden daher auch als Lenkwinkelsensoren bezeichnet. Derartige optoelektronische Lenkwinkelsensoren bestehen im wesentlichen aus einer an die Drehbewegung des Lenkrades gekoppelten Codescheibe als Rotor sowie statorseitig aus einer Sende-Empfangseinheit. Die Sende-Empfangseinheit umfaßt eine auf der einen Seite der Codescheibe befindliche Lichtquelle, beispielsweise eine LED-Anordnung und auf der anderen Seite der Codescheibe eine Empfangseinheit, die üblicherweise ein Zeilensensor mit zahlreichen nebeneinanderliegenden Wandlerelementen ist. Als Codierung der Codescheibe wird mitunter ein digitaler Code eingesetzt, der aus mehreren, parallelen Codespuren besteht und beispielsweise nach Art eines Gray-Codes aufgebaut ist.

Der Lenkwinkel wird bei Kraftfahrzeugen benötigt, um mit diesem Wert etwa ein Fahrdynamikregelsystem beaufschlagen zu können. Ein solches Fahrdynamikregelsystem erhält neben den genannten Lenkwinkelwerten weitere Meßdaten, etwa die Raddrehzahl oder die Drehung des Kraftfahrzeuges um seine Hochachse. Benötigt werden zum einen der absolute Lenkwinkeleinschlag und zum anderen die Lenkgeschwindigkeit, damit diese Werte zusammen mit den anderen erfaßten Daten durch das Fahrdynamikregelsystem ausgewertet und zum Steuern von Aktoren, beispielsweise der Bremsen und/oder des Motormanagements umgesetzt werden können.

Bei den vorbekannten Weg- oder Winkelmesseinrichtungen erfolgt eine Auswertung der Signalamplituden der jeder Codespur zugeordneten Wandlerelemente durch einen Vergleich der Signalamplitude mit einem vorgegebenen Signalschwellwert. Wird der Signalschwellwert überschritten, erfolgt eine Auswertung der Signalamplitude der dieser Codespur zugeordneten Wandlerelemente als durch die Codierung der Codespur belichtet. Ist die Signalamplitude kleiner als der vorgegebene Signalschwellwert erfolgt eine Auswertung dahingehend, dass durch die Codierung dieser Codespur eine Belichtung der dieser Codespur zugeordneten Wandlerelemente nicht vorliegt.

Eine Zuordnung bestimmter Wandlerelemente zu einer Codespur wird bei dem vorbekannten Verfahren eingesetzt, um ein Spiel der Codescheibe bei ihrer Bewegung gegenüber der Sende-Empfangseinheit zu kompensieren. Zu diesem Zweck ist der Codierung zumindest eine Referenzspur zugeordnet. Da der Abstand der Codespuren zu der Referenzspur über die Länge der Codespuren hin gleich ist, kann bei Bestimmung der Lage der Referenzspur auf dem Sensorarray ermittelt werden, welche Wandlerelemente durch welche Codespuren belichtet werden können.

Auch wenn mit dem vorbekannten Verfahren unter gleichbleibenden, auf eine Signaldetektion Einfluß nehmenden Bedingungen hinreichend genaue Ergebnisse erzielt werden können, können die Meßergebnisse jedoch bei solchen Weg- und Winkelmesseinrichtungen verfälscht sein, wenn beispielsweise durch umgebungsbedingte Einflüsse die bei der Konzeption der Weg- oder Winkelmesseinrichtung vorgegebenen idealisierten Meßparameter sich ändern. Insbesondere bei einem Einsatz einer solchen Winkelmesseinrichtung als Lenkwinkelsensor in einem Kraftfahrzeug ist eine exakte Winkeldetektion unter unterschiedlichsten Einflüssen zu gewährleisten. Beeinflussen kann eine solche Meßanordnung beispielsweise Streulicht, ein Beschlagen oder Vereisen oder auch ein Verstauben der Codescheibe, wobei in diesen beispielhaft genannten Fällen oftmals der Signalschwellwert nicht nur bei einer tatsächlichen direkten Belichtung durch die Codierung einer Codespur überschritten wird, sondern auch durch die einer solchen Codespur zugeordneten Wandlerelemente belichtendes Streulicht. Entsprechend kann beispielsweise bei einem Verstauben auch der Signalschwellwert trotz Belichtung durch die Codierung einer Codespur nicht überschritten werden. In diesen Fällen ist der aus einem Lenkwinkelsensor ausgelesene Winkelwert fehlerbehaftet; entsprechend sind die auf diesen Wert aufbauenden nachfolgenden Aus- und Bewertungen ebenfalls fehlerbehaftet.

Aus der DE 196 38 912 A1 ist ein Verfahren gemäß dem Oberbegriff des Patentanspruchs 1 bekannt, bei dem der Kontrast zwischen der Wiedergabe lichtdurchlässiger und lichtundurchlässiger Codierfelder bestimmt wird, und bei Bedarf die Sendeleistung der Lichtquelle an geänderte Verhältnisse angepasst wird.

Aus der WO 99/32345 A1 ist ebenfalls ein Verfahren gemäß dem Oberbegriff des Patentanspruchs 1 bekannt, bei dem zusätzlich zu einer Codespur zwei eine regelmäßige Abfolge lichtdurchlässiger und lichtundurchlässiger Felder aufweisende Referenzspuren vorhanden sind, die eine Modulation der Amplitude des Codesignals bewirken, die als Referenzsignal aus diesem extrahiert werden kann.

Bei diesen beiden vorbekannten Verfahren muss ein mit dem Codesignal optisch verschmolzenes Signal jeweils signaltechnisch als Referenzsignal von diesem wieder getrennt werden.

Ausgehend von diesem diskutierten Stand der Technik liegt der Erfindung daher die Aufgabe zugrunde, ein eingangs genanntes gattungsgemäßes Verfahren dergestalt weiterzubilden, dass die oben aufgezeigten Nachteile zumindest weitestgehend vermieden werden können.

Diese Aufgabe wird erfindungsgemäß dadurch gelöst, dass die Signalamplitude einer Referenzspur, die auch zur Kompensation von Bewegungen der Codescheibe in Querrichtung zur Erstreckung der Codierung vorgesehen ist, als Referenzsignal erfasst wird, dass die Signalamplitude des Referenzsignals ausgewertet und mit einem Absolutwert oder mit zuvor erfassten und gespeicherten Referenzsignalamplituden verglichen wird, und dass anschließend eine Adaption zumindest eines der zur Amplitudenauswertung der Codespursignale relevanten Parameter im Sinne des Ergebnisses der Auswertung der Signalamplitude des Referenzsignals erfolgt.

Bei dem erfindungsgemäßen Verfahren ist vorgesehen, dass zur Kompensation von sich ändernden Meßbedingungen zumindest ein zur Amplitudenauswertung relevanter Parameter der Meßanordnung adaptiert wird. Dies erfolgt dadurch, dass neben dem Signal der zumindest einen Codespur die Signalamplitude eines Referenzsignals erfasst wird. Dadurch, dass das Referenzsignal durch eine eigene Spur der Codescheibe bereitgestellt wird, die auch zur Kompensation von Bewegungen der Codescheibe in Querrichtung zur Erstreckung der Codierung vorgesehen ist, ist sichergestellt, dass bei Verwendung eines solchen Referenzsignals lediglich solche Bereiche als tatsächliches Referenzsignal eingesetzt sind, in denen die dieser Spur zugeordneten Wandlerelemente tatsächlich belichtet werden. In einem weiteren Verfahrensschritt wird die Signalamplitude des Referenzsignals ausgewertet und gegebenenfalls mit einem Absolutwert oder mit zuvor erfaßten und gespeicherten Referenzsignalamplituden verglichen. Anschließend erfolgt eine Adaption zumindest eines der zur Amplitudenauswertung relevanten Parameters im Sinne des Ergebnisses der Auswertung der Signalamplitude des Referenzsignals. Ist beispielsweise die Signalamplitude des Referenzsignals gegenüber früheren Referenzsignalamplituden reduziert, beispielsweise durch ein Beschlagen der Codescheibe oder durch auf der Codescheibe abgelagerten Staub, kann dieses dadurch kompensiert werden, dass die Belichtungszeit bzw. die zur Erfassung einer Signalamplitude benötigte Messschrittanzahl als für die Auswertung der Signalamplituden relevanter Parameter erhöht wird. Ebenfalls kann die Leuchtstärke der Lichtquelle erhöht werden, so dass die Signalamplitude des Referenzsignals nach dieser Adaption wieder den ursprünglich eingerichteten Wert aufweist.

Die Empfindlichkeit der Adaption kann unterschiedlich betrieben werden. Beispielsweise kann vorgesehen sein, dass der Schritt des Auswertens der Signalamplitude des Referenzsignals eine Mittelwertbildung über eine bestimmte Messschrittanzahl umfaßt. Auf diese Weise erfolgt eine gedämpfte Adaption des Systems nach dem Prinzip einer gleitenden Mittelwertadaption. Die Adaptionszeit ist bei Betreiben des Verfahrens auf diese Art und Weise in Abhängigkeit von der gewünschten Messschrittanzahl langsamer als ein System, bei dem eine Adaption bei jedem Meßschritt erfolgt. Eine Adaption des zur Signalauswertung relevanten Parameters erfolgt in Abhängigkeit von dem ermittelten Mittelwert.

Ferner kann vorgesehen sein, dass die Auswertung der Signalamplitude des Referenzsignals einen Vergleich mit einer Referenzsignalamplitude beinhaltet, beispielsweise einer oder mehrerer vorangegangener, um beispielsweise den Gang der Änderungen dokumentieren zu können und gegebenenfalls eine Interpolation bezüglich des Umfanges zukünftiger Änderungen getroffen werden können.

Das erfindungsgemäße Verfahren ist in einer zweckmäßigen Weiterbildung dergestalt erweitert, dass zur Auswertung der Signalamplituden der einer Codespur zugeordneten Wandlerelemente der relative Helligkeitsunterschied zwischen dem bei einer Belichtung relativ helleren Codespursignal und einem relativ dunkleren Nichtspursignal ermittelt wird und in Abhängigkeit von dem ermittelten Helligkeitsunterschied eine Feststellung erfolgt, ob die der Codespur zugeordneten Wandlerelemente durch die Codierung belichtet oder unbelichtet sind.

Bei diesem Verfahren erfolgt eine Auswertung der einer Codespur zugeordneten Signalamplitude durch eine Ermittlung des relativen Helligkeitsunterschieds zwischen dem bei einer Belichtung relativ helleren Codespursignal und einem dem gegenüber relativ dunkleren Nichtspursignal. Die Auswertung erfolgt somit grundsätzlich unabhängig von einem lediglich die absolute Signalamplitude berücksichtigenden Signalschwellwert. Die Auswertung der Signalamplituden ist auf diese Weise empfindlicher, so dass die Entscheidungsschwelle auf einem wesentlich niedrigeren Niveau angesiedelt sein kann. Auf diese Weise lassen sich umgebungsbedingte Einflüsse durch die Relativauswertung kompensieren. Bei einer möglichen, auch nur lokalen Erniedrigung der die Wandlerelemente des Sensorarrays belichtenden Leuchtstärke, bei der beispielsweise beim vorbekannten Stand der Technik eine Signalerkennung nicht mehr erfolgen würde, bleibt weiterhin ein detektierbarer Kontrast zwischen einer bestimmte Wandlerelemente des Sensorarrays belichtenden Codespur bzw. Codespurabschnittes und den durch diese Codespuren nicht belichteten Nichtspurabschnitten vorhanden, so dass die gewünschte Auswertung uneingeschränkt durchgeführt werden kann. Eine Auswertung der Signale einer Codespur erfolgt dann in Abhängigkeit von dem ermittelten Helligkeitsunterschied zwischen den bei einer Belichtung relativ helleren Codespursignal und einem relativ dunkleren Nichtspursignal durch eine Feststellung, ob die der zumindest einen Codespur zugeordneten Wandlerelemente durch die Codierung belichtet oder unbelichtet sind.

Der Helligkeitsunterschied zwischen den Signalamplituden einer Codespur bzw. einer Nichtcodespur kann beispielsweise durch eine Differenzbetrachtung dieser Signalamplituden erfolgen, wobei als Signalschwellwert ein vorgegebener Helligkeitsunterschied dient. Zum Ermitteln des relativen Helligkeitsunterschiedes der beiden Signalamplituden kann jedoch auch vorgesehen sein, diese in ein Verhältnis zueinander zu setzen, wobei dann als Signalschwellwert ein vorgegebenes Verhältnis dient.

Als relativ dunklere Nichtcodespur kann ein sich über den möglichen Bewegungsbetrag der Codescheibe gleichbleibende Dunkelspur vorgesehen sein, die sich beispielsweise neben der digitalen Codierung befindet. Es besteht jedoch auch die Möglichkeit, bei einem Einsatz von mehreren parallel zueinander verlaufenden Codespuren, die ohnehin vorhandenen Zwischenräume zwischen den Codespuren als sogenannte Zwischenspuren zu verwenden, um die diesen Zwischenspuren zugeordneten Wandlerelemente des Sensorarrays als Nichtspursignale auszuwerten. Bei besonders widrigen, kontrastarmen Meßbedingungen kann es jedoch vorkommen, dass die zur Erfassung eines Nichtspursignals vorgesehenen Wandlerelemente des Sensorarrays bei einer Belichtung durch die beiden benachbarten Codespuren ebenfalls in etwa mit derselben Helligkeit belichtet werden können. Folglich ist der sich einstellende Kontrast zwischen dem Zwischenspursignal und dem Codespursignal bei einer Belichtung sehr gering, unter Umständen zu gering, um auf eine Belichtung der den beiden Codespuren zugeordneten Wandlerelemente schließen zu können. In solchen Fällen kann dennoch ein exaktes Meßergebnis erzielt werden, wenn als Nichtspursignal ein entsprechend dunkleres herangezogen wird. Ferner besteht die Möglichkeit, zusätzlich einen absoluten Signalschwellwert auf relativ hohem Niveau zu setzen, so dass auf eine Belichtung der einer Codespur zugeordneten Wandlerelemente geschlossen werden kann, wenn entweder der relative Helligkeitsunterschied zwischen der Signalamplitude der Codespur und einem Nichtspursignal entsprechend groß ist oder die Signalamplitude der einer Codespur zugeordneten Wandlerelemente den absoluten Signalschwellwert überschreitet.

## Patentansprüche

1. Verfahren zur Signalauswertung einer optoelektronischen Weg- oder Winkelmesseinrichtung mit einer gegenüber einer aus einer Lichtquelle und einem eine Vielzahl von optoelektronischen Wandlerelementen aufweisenden Sensorarray umfassenden Sende-Empfangseinheit relativ bewegbaren, zumindest eine Codespur aufweisenden Codescheibe, welches Verfahren Verfahrensschritte zum Anpassen zumindest eines für die Auswertung der sich bei einer Belichtung eines Wandlerelementes des Sensorarrays ergebenden Amplitude der Codespursignale relevanten Parameters an sich ändernde Messbedingungen beinhaltet, **dadurch gekennzeichnet, dass** die Signalamplitude einer Referenzspur, die auch zur Kompensation von Bewegungen der Codescheibe in Querrichtung zur Erstreckung der Codierung vorgesehen ist, als Referenzsignal erfasst wird, dass die Signalamplitude des Referenzsignals ausgewertet und mit einem Absolutwert oder mit zuvor erfassten und gespeicherten Referenzsignalamplituden verglichen wird, und dass anschließend eine Adaption des zumindest einen für die Auswertung der sich bei einer Belichtung eines Wandlerelementes des Sensorarrays ergebenden Amplitude der Codespursignale relevanten Parameters im Sinne des Ergebnisses der Auswertung der Signalamplitude des Referenzsignals erfolgt.

2. Verfahren nach Anspruch 1, **dadurch gekennzeichnet, dass** der Schritt des Auswertens der Signalamplitude des Referenzsignals eine Mittelwertbildung über eine bestimmte Messschrittanzahl umfasst und eine Adaption des zumindest einen zur Signalauswertung relevanten Parameters in Abhängigkeit von dem ermittelten Mittelwert vorgenommen wird.

3. Verfahren nach Anspruch 1 oder 2, **dadurch gekennzeichnet, dass** die Auswertung der Signalamplitude des Referenzsignals einen Vergleich mit einer Referenzsignalamplitude beinhaltet.

4. Verfahren nach einem der Ansprüche 1 bis 3, **dadurch gekennzeichnet, dass** zur Adaption des zumindest einen zur Signalauswertung relevanten Parameters die Belichtungszeit geändert wird.

5. Verfahren nach einem der Ansprüche 1 bis 3 oder 4, **dadurch gekennzeichnet, dass** zur Adaption des zumindest einen zur Signalauswertung relevanten Parameters die Leuchtstärke der Lichtquelle geändert wird.

6. Verfahren nach einem der Ansprüche 1 bis 3 oder 4 oder 5, **dadurch gekennzeichnet, dass** zur Adaption des zumindest einen zur Signalauswertung relevanten Parameters der Signalschwellwert zur Unterscheidung, ob die einer Codespur zugeordneten Wandlerelemente durch die Codierung belichtet oder unbelichtet sind, geändert wird.

7. Verfahren nach einem der Ansprüche 1 bis 6, **dadurch gekennzeichnet, dass** zur Auswertung der Signalamplituden der einer Codespur zugeordneten Wandlerelemente der relative Helligkeitsunterschied zwischen dem bei einer Belichtung relativ helleren Codespursignal und einem relativ dunkleren Nichtspursignal ermittelt wird.

8. Verfahren nach einem der Ansprüche 1 bis 7, **dadurch gekennzeichnet, dass** zur Auswertung der Signalamplituden der einer Codespur zugeordneten Wandlerelemente der relative Helligkeitsunterschied zwischen dem bei einer Belichtung relativ helleren Codespursignal und einem relativ dunkleren Nichtspursignal ermittelt wird und in Abhängigkeit von dem ermittelten Helligkeitsunterschied eine Feststellung erfolgt, ob die der Codespur zugeordneten Wandlerelemente durch die Codierung belichtet oder unbelichtet sind.

9. Verfahren nach Anspruch 8, **dadurch gekennzeichnet, dass** der Helligkeitsunterschied durch eine Differenzbetrachtung der Signalamplituden der einer Codespur bzw. einer Nichtcodespur zugeordneten Wandlerelemente ermittelt wird und als Signalschwellwert für die Feststellung, ob die der Codespur zugeordneten Wandlerelemente durch die Codierung belichtet oder unbelichtet sind, ein vorgegebener Helligkeitsunterschied eingesetzt wird.

10. Verfahren nach Anspruch 8, **dadurch gekennzeichnet, dass** zum Ermitteln des relativen Helligkeitsunterschiedes die Signalamplituden der einer Codespur bzw. einer Nichtcodespur zugeordneten Wandlerelemente ins Verhältnis zueinander gesetzt werden und als Signalschwellwert für die Feststellung, ob die der Codespur zugeordneten Wandlerelemente durch die Codierung belichtet oder unbelichtet sind, ein vorgegebenes Verhältnis eingesetzt wird.

11. Verfahren nach einem der Ansprüche 8 bis 10, **dadurch gekennzeichnet, dass** für die Feststellung, ob die der Codespur zugeordneten Wandlerelemente durch die Codierung belichtet oder unbelichtet sind, zusätzlich ein absoluter Signalschwellwert durch die Signalamplitude der der zumindest einen Codespur zugeordneten Wandlerelemente über- bzw. unterschritten sein muß.

12. Verwendung eines Verfahrens nach einem der Ansprüche 1 bis 11, **dadurch gekennzeichnet, dass** das Verfahren zum Auswerten der Signale eines Sensorarrays eines Lenkwinkelsensors eines Kraftfahrzeuges eingesetzt wird.

## Claims

1. Process for evaluating the signals of an optoelectronic path or angle measuring facility having a code disk which has at least one code track and can be moved relatively to a transmitter / receiver unit encompassing a light source and a sensor array having a plurality of optoelectronic transducer elements, the said process incorporating procedural steps for adapting at least one parameter relevant to the evaluation of the amplitude of the code track signals arising upon exposing a transducer element of the sensor array to changing measuring conditions, **characterised in that** the signal amplitude of a reference track, which is also provided to compensate for movements of the code disk in the transverse direction to the extension of the coding, is recorded as a reference signal, that the signal amplitude of the reference signal is evaluated and compared to an absolute value or with previously recorded and stored reference signal amplitudes, and that subsequently an adaptation of the at least one parameter that is relevant to the evaluation of the amplitude of the code track signals arising upon exposure of a transducer element of the sensor array is carried out within the sense of the result of the evaluation of the signal amplitude of the reference signal.

2. Process according to Claim 1, **characterised in that** the step of evaluating the signal amplitude of the reference signal encompasses the formation of a mean value over a certain number of measuring steps and an adaptation of the at least one parameter relevant to the evaluation of the signal is conducted depending on the established mean value.

3. Process according to Claim 1 or Claim 2, **characterised in that** the evaluation of the signal amplitude of the reference signal incorporates a comparison to a reference signal amplitude.

4. Process according to any of Claims 1 to 3, **characterised in that** the exposure time is changed for the purpose of adapting the at least one parameter relevant to the evaluation of the signal.

5. Process according to any of Claims 1 to 3 or 4, **characterised in that** the luminous intensity of the light source is changed for the purpose of adapting the at least one parameter relevant to the evaluation of the signal.

6. Process according to any of Claims 1 to 3 or 4 or 5, **characterised in that** the signal threshold value for differentiating whether the transducer elements allocated to a code track are exposed or unexposed by the coding for the purpose of adapting the at least one parameter relevant to the evaluation of the signal, is changed.

7. Process according to any of Claims 1 to 6, **characterised in that** the relative difference in brightness between a relatively lighter code track signal and a relatively darker non-track signal during an exposure is determined to evaluate the signal amplitudes of the transducer elements allocated to the one code track.

8. Process according to any of Claims 1 to 7, **characterised in that** the relative difference in brightness between the relatively lighter code track signal and a relatively darker non-track signal during an exposure is established to evaluate the signal amplitudes of the transducer elements allocated to the one code track and, depending on the ascertained difference in brightness, it is determined whether the transducer elements allocated to the code track are exposed or unexposed.

9. Process according to Claim 8, **characterised in that** the difference in brightness is determined by a difference contemplation of the signal amplitudes of the transducer elements allocated to the one code track or to a non-code track, as the case may be, and a predefined difference in brightness is utilised as a signal threshold value for determining whether the transducer elements allocated to the code track are exposed or unexposed by the coding.

10. Process according to Claim 8, **characterised in that** the signal amplitudes of the transducer elements allocated to the one code track or to a non-code track, as the case may be, are set in relation to each other to determine the relative difference in brightness and a predefined ratio is utilised as a signal threshold value for determining whether the transducer elements allocated to the code track are exposed or unexposed by the coding.

11. Process according to any of Claims 8 to 10, **characterised in that** in order to determine whether the transducer elements allocated to the code track are exposed or unexposed by the coding, an absolute signal threshold value additionally has to be exceeded or fallen short of by the signal amplitude of the transducer elements allocated to the at least one code track.

12. Application of a process according to any of Claims 1 to 11, **characterised in that** the process is utilised for evaluating the signals of a sensor array of a steering angle sensor of a motor vehicle.

## Revendications

1. Procédé d'évaluation des signaux d'un dispositif optoélectronique de mesure de parcours ou d'angle, avec un disque codé, qui, pouvant être déplacé par rapport à une unité d'émission/réception comprenant un réseau de capteurs, doté de nombreux éléments convertisseurs optoélectroniques, présente au moins une piste codée, ledit procédé comprenant des étapes pour adapter, à des conditions de mesure variables, au moins un paramètre important pour l'évaluation de l'amplitude des signaux de piste codée résultant d'une exposition d'un élément convertisseur du réseau de capteurs, **caractérisé en ce que** l'amplitude des signaux d'une piste de référence, qui est aussi prévue pour la compensation des déplacements du disque codé transversalement par rapport au sens du codage, est saisie en tant que signal de référence, que l'amplitude du signal de référence est évaluée et comparée avec une valeur absolue ou avec des amplitudes de signaux de référence précédemment saisies et mémorisées, et qu'une adaptation de l'ai moins un paramètre important pour l'évaluation de l'amplitude des signaux de piste codée résultant d'une exposition d'un élément convertisseur du réseau de capteurs, est ensuite effectuée au sens du résultat de l'évaluation de l'amplitude du signal de référence.

2. Procédé selon la revendication 1, **caractérisé en ce que** l'étape de l'évaluation de l'amplitude du signal de référence comprend une formation de la valeur moyenne par l'intermédiaire d'un nombre déterminé d'étapes de mesure et une adaptation de l'au moins un paramètre, important pour l'évaluation de signaux, en fonction de la valeur moyenne déterminée.

3. Procédé selon revendication 1 ou 2, **caractérisé en ce que** l'évaluation de l'amplitude du signal de référence comprend une comparaison avec une amplitude de signaux de référence.

4. Procédé selon l'une des revendications 1 à 3, **caractérisé en ce que,** pour l'adaptation de l'au moins un paramètre important pour l'évaluation de signaux, le temps d'exposition est modifié.

5. Procédé selon l'une des revendications 1 à 3 ou 4, **caractérisé en ce que,** pour l'adaptation de l'au moins un paramètre important pour l'évaluation de signaux, la luminosité de la source lumineuse est modifiée.

6. Procédé selon l'une des revendications 1 à 3 ou 4 ou 5, **caractérisé en ce que,** pour l'adaptation de l'au moins un paramètre important pour l'évaluation de signaux, la valeur de seuil de signal est modifiée pour différencier si les éléments convertisseurs, associés à une piste codée sont exposés ou non exposés par le codage.

7. Procédé selon l'une des revendications 1 à 6, **caractérisé en ce que,** pour l'évaluation des amplitudes de signaux des éléments convertisseurs associés à une piste codée, la différence de luminosité relative entre le signal de piste codée relativement plus clair lors d'une exposition et un signal non associé à une piste codée relativement plus sombre est déterminée.

8. Procédé selon l'une des revendications 1 à 7, **caractérisé en ce que,** pour l'évaluation des amplitudes de signaux des éléments convertisseurs associés à une piste codée, la différence de luminosité relative entre le signal de piste codée relativement le plus clair et un signal non associé à une piste codée relativement plus sombre est déterminée et qu'il est constaté, en fonction de la différence de luminosité déterminée, si les éléments convertisseurs, associés à une piste codée sont exposés ou non par le codage.

9. Procédé selon la revendication 8, **caractérisé en ce que** la différence de luminosité est déterminée par la considération de la différence des amplitudes de signaux des éléments convertisseurs, associés à une piste codée, respectivement des éléments convertisseurs, non associés à une piste codée, et que, pour constater si les éléments convertisseurs, associés à la piste codée sont exposés ou non exposés par le codage, une différence de luminosité prédéterminée est établie comme valeur de seuil de signal.

10. Procédé selon la revendication 8, **caractérisé en ce que,** pour la détermination de la différence de luminosité relative, les amplitudes de signaux des éléments convertisseurs, associés à une piste codée ou non associés à une piste codée, sont mises en relation et que, comme valeur de seuil de signal, un rapport prédéterminé est établi en tant que valeur de seuil de signal pour constater si les éléments convertisseurs, associées à la piste codée sont exposés ou non exposés par le codage.

11. Procédé selon l'une des revendications 8 à 10, **caractérisé en ce que,** pour constater si les éléments convertisseurs, associés à la piste codée sont exposés ou non exposés au codage, une valeur de seuil de signal absolue doit être, de plus, dépassée vers le haut ou vers le bas par l'amplitude de signaux des éléments convertisseurs, à l'au moins une piste de code.

12. Utilisation d'un procédé selon l'une des revendications 1 à 11, **caractérisée en ce que** ledit procédé est utilisé pour l'évaluation des signaux d'un réseau de capteurs d'cun détecteur d'angle de braquage d'un véhicule automobile.
